# EUROPEAN PATENT SPECIFICATION

(11) **EP 1 320 915 B1**
(45) Date of publication and mention of the grant of the patent: **08.07.2009**
(21) Application number: 01963670.3
(22) Date of filing: 06.09.2001
(51) Int. Cl.: H02G 1/16, H01R 9/05

(54) **A METHOD OF RESTORING ARMOURING ON A CABLE**
VERFAHREN ZUR WIEDERHERSTELLUNG DER ARMIERUNG AN EINEM KABEL
PROCEDE DE RESTAURATION DU BLINDAGE SUR UN CABLE

(30) Priority: 07.09.2000 SE 0003152
(43) Date of publication of application: 25.06.2003
(73) Proprietor: ABB AB, 721 83 Västerås (SE)
(72) Inventor: HANSSON, Anders, S-371 60 Lyckeby (SE); NYBERG, Sverker, S-371 46 Karlskrona (SE); SUNNEGARDH, Peter, S-372 50 Kallinge (SE)
(74) Representative: Dahlstrand, Björn
(86) International application number: PCT/SE2001/001909
(87) International publication number: WO 2002/021654

(56) References cited:
- EP-A2- 0 450 271
- DE-C1- 465 409
- US-A- 4 495 379
- US-A- 4 965 411

## Description

### TECHNICAL FIELD

The present invention relates to a method of restoring armouring on a cable, in connection with jointing or after a repair of a cable, whereby a plurality of armour wires, distributed essentially uniformly around the circumference of the cable, are brought to make contact with the cable, in the form of helical lines, and are fixed to the envelope surface of the cable.

By restoring armouring is meant here both replacement of armouring which has been removed for jointing or repair work and new armouring for the purpose of joining together the armouring of the cables, for example on either side of a joint. By cable is meant a means of transmitting electric current designed with one or more conductors surrounded by insulating material. The word cable is used in the following also as a general expression for the two parts which are being joined together as well as for designating the joined-together result including the joint. The invention is primarily intended to be used when working with high-voltage cable for underwater use, for example on the seabed.

### BACKGROUND ART

In addition to a satisfactory electrical insulation, electric cables must usually also possess a mechanical strength for relatively great tensile stresses. Also in those cases where the cable during operation remains unloaded in the ground or on a seabed, the stresses may become very great when laying the cable. When manufacturing cable, the cable is therefore provided with one or more layers of armouring which, besides protecting against mechanical damage, is to be able to withstand the expected load when laying the cable. In connection with jointing while laying the cable, or in connection with repairs which necessitate removal of the armouring, new armouring must be supplied over the joint or the repair and be connected to the armouring on either side of the joint by means of, for example, weld joints.

One known method for restoring armouring comprises laying pre-profiled wires manually around the cable. A method for such restoration is described in EP 450 271. This is a time-consuming operation which, in addition, requires both strength and experience for the result to become satisfactory. Since the cross-section area of the cable usually becomes larger at, for example, a joint and deviations from a circular shape may occur, the work often becomes problematic. During transport of pre-profiled wires to a place of work, there is also the risk of the wires being deformed and that they either have to be adjusted or rejected.

### OBJECTS OF THE INVENTION

The main object of the invention is to suggest a simple, safe and flexible method of restoring armouring of cables in connection with jointing or after a repair.

A second object is to suggest a method of restoring armouring of cables in connection with jointing or after a repair without the use of pre-profiled armour wires.

A third object is to suggest a method of restoring armouring of cables with non-circular cross sections in connection with jointing or after a repair.

### SUMMARY OF THE INVENTION

The present invention relates to a method for restoring armouring on a cable, in connection with jointing or after a repair of a cable, whereby a plurality of armour wires, distributed essentially uniformly around the circumference of the cable, are brought to make contact with the cable, in the form of helical lines or the like, and are fixed to the envelope surface of the cable.

According to the invention, essentially straight armour wires are placed around the joint or the repair, essentially in parallel with the cable, such that a cage, or part of a cage, limited by a cage wall consisting of essentially parallel armour wires, is formed. Torsion is applied to the cage wall such that the armour wires are given the shape of helical lines or an essentially helical-like shape close to the surface of the cable and the joint or the repair. The two ends of the armour wires which are in the shape of helical lines, or which have an essentially helical line-like shape, are connected to the armouring of the cable on respective sides of the joint or the repair. The armouring is lashed over the whole, or essentially the whole, region of the joint or the repair.

### GENERAL DESCRIPTION OF THE INVENTION

When laying high-voltage cables, above all on the seabed, the mechanical stresses on the cable become very great. The cable must be designed and dimensioned to carry the length of cable which is not yet supported by the seabed, which may be question of hundreds of metres.

High-voltage cables for use on the seabed must therefore be provided with supporting elements, for example armour wires around the primary electrical insulation. In connection with jointing or a repair, the armourings on both sides of the joint or the repair must be connected to each other to retain the tensile strength. This can be done by bringing a plurality of armour wires, distributed essentially uniformly around the circumference of the cable, to make contact with the cable, in the form of helical lines or the like, and be fixed to the envelope surface of the cable, and be welded to the armouring of the cable.

According to the present invention, a method for restoring armouring on a cable, in connection with jointing or after a repair, is suggested. In this method, essentially straight armour wires are placed around the joint or the repair, such that a cage, or part of a cage, limited by a cage wall consisting of essentially parallel armour wires, is formed. Thereafter, torsion is applied to the cage wall such that the armour wires are given the shape of helical lines, or an essentially helical line-like shape, close to the surface of the joint or the repair. Then, the ends of the armour wires which are in the shape of helical lines, or which have an essentially helical line-like shape, are connected to the armouring of the cable on respective sides of the joint or the repair, and, finally, the armouring is lashed over the whole, or essentially the whole, region of the joint or the repair, for example with wire, yarn or polymer tape.

The number of armour wires should be adapted to the circumference of the cable. At a joint or in connection with a repair, a section with a larger diameter is often obtained. According to the invention, this is taken into consideration by either increasing the number of wires in the cage wall with increasing diameter of the joint or the repair, or by reducing the pitch of the helical line with increasing diameter of the joint or the repair. The choice of method must be made while taking into consideration the required tensile strength.

In an advantageous embodiment, the armour wires are fitted through, or placed in some other way in, two or more members which are rotatable around the cable and which, while rotating in opposite directions, apply torsion to the cage wall. Preferably, at least two of these rotatable members are moved, while mutually rotating in opposite directions, along the cable away from each other. This may occur synchronously or such that one rotatable member is held still whereas the other is moved and then, inversely, the second one is moved whereas the first one is held still.

Further, a clamping member, adjacent to the two rotatable members mentioned, may advantageously be passed after these across the joint or the repair for the purpose of pressing the armour wires against the surface of the cables and the joint. This clamping member may have a fixed dimension, but must in that case be replaced over a thicker section of the joint. The clamping member may also be manually adjustable or make contact in a resilient manner and adapt itself automatically to the cross section.

Within the scope of the invention, the armouring may also be restored in two or more steps. This may be made by laying, in a first step, only every other wire or by laying wires on one half of the cable only, etc. It is, of course, also possible to restore armouring in more than one layer, by repeating the suggested method.

The rotation of the rotatable elements, to give the desired torsion of the cage, and the longitudinal feed thereof may be made manually or with a mechanical drive means.

In a suitable further development of the method, an application of bitumen or the like is made in connection with restoring the armouring. If armouring occurs in two or more layers, bitumen should be applied separately for each layer.

### BRIEF DESCRIPTION OF THE DRAWINGS

The invention will now be explained in greater detail with reference to the accompanying drawings, wherein
Figure 1 shows an overall view of a device suitable for use according to the suggested method at the start of the armouring;
Figure 2 shows an overall view of the same device at a somewhat later time;
Figure 3 schematically shows a rotatable member which is part of the device according to Figures 1 and 2;
Figure 4 schematically shows a first clamping member suitable for use in the device according to Figure 2;
Figure 5 schematically shows a second clamping member suitable for use in the device according to Figure 2.

### DESCRIPTION OF THE PREFERRED EMBODIMENTS

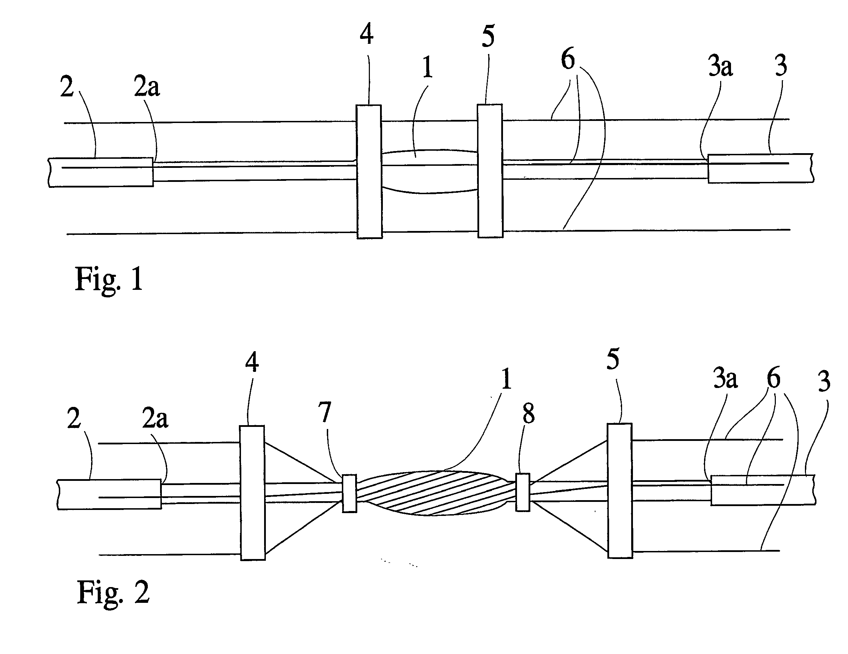

Figures 1 and 2 schematically show a device for restoring the armouring of a cable in two different operating phases at a joint 1 between two cables 2 and 3. The armouring of the cables 2, 3 has been partially removed and terminates at positions 2a, 3a, some distance away from the joint 1. The distance between the positions 2a and 3a may be 10 m or more.

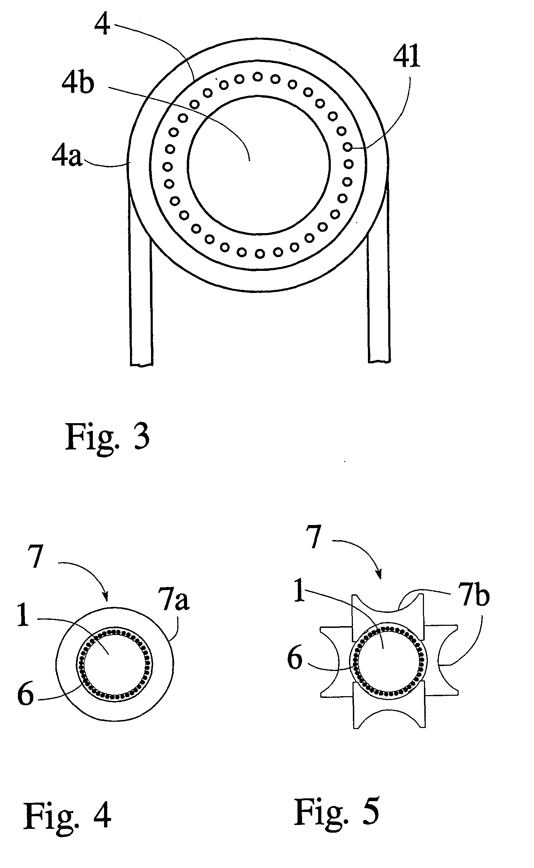

Around the cable joint 1, a plurality of essentially straight armour wires 6, of which only three are shown, have been pulled through a first rotatable member 4 and a second rotatable member 5. A suitable embodiment of these rotatable members 4, 5 is shown in more detail in Figure 3. Two clamping members 7, 8 are arranged, in Figure 2, between the rotatable members 4, 5 close to these members.

Figure 3 shows a rotatable member 4 supported by a non-rotatable means 4a which, in turn, rests on a movable device (not shown), such as a carriage or the like, to enable it to be passed along the cable. The rotatable member 4 has a plurality of holes 41, symmetrically placed, intended to guide and support the armour wires.

Figure 4 shows a first embodiment of a clamping member 7 in the form of a nipple 7a with a fixed inside dimension. Inside the nipple 7a, the cable joint 1 and a plurality of armour wires 6 are retained such that the armour wires 6 are pressed against the cable joint 1.

The rotatable members 4, 5 and the clamping member 7 as well as the non-rotatable means 4a supporting the first rotatable member 4 and the corresponding means supporting the second rotatable member 5 are divisible (in a manner not shown), such that the may be mounted and dismantled in a simple and rational way.

Figure 5 shows a second embodiment.of a clamping member 7 comprising four rolls 7b, resembling reels of cotton. By means not shown, the rolls 7b resembling reels of cotton are pressed by spring force against the cable joint 1 and may hence follow the surface also when the cross section varies, and hence the armour wires 6 are efficiently pressed against the cable joint 1.

In the embodiment according to the invention, a suitable number of armour wires 6 are pulled through holes 41 in the rotatable members 4 and 5, thus forming a cage with a wall consisting of essentially straight wires in parallel with the cable. The length of the wires 6 is adapted to the length of armouring which is to be restored and must, in order to achieve this, be considerably longer than the distance between the ends 2a, 3a for the armouring of the two cables 2, 3.

While both of the rotatable members 4 and 5 are simultaneously counter-rotated, the rotatable members 4 and 5 are brought, from a position near the centre of the joint 1, across the joint 1, away from each other towards the position 2a where the armouring of the first cable 2 starts and towards the position 3a where the armouring of the second cable 3 starts, respectively. Rotation and longitudinal movement are adapted such that a tight mat of armour wires 6 is formed across the joint. To ensure this, two clamping members 7, 8 are applied around the cable joint across the mat of armour wires 6 formed and are moved along the joint after the respective rotatable member 4, 5. When the clamping member 7 reaches the position 2a where the armouring of the first cable 2 starts, the armour wires 6 are cut off and are welded together with the armouring of the first cable 2. When the clamping member 8 reaches the position 3a where the armouring of the second cable 3 starts, the armour wires 6 are cut off and are welded together with the armouring of the second cable 3.

Thereafter, the whole, or almost the whole, region with restored armouring is lashed with yarn of, for example, polypropylene. Before the lashing, bitumen is applied over the region with the restored armouring, among other things to prevent or at least reduce corrosion.

### ALTERNATIVE EMBODIMENTS

The method according to the invention is, of course, not limited to the embodiment described above but may be varied in a plurality of ways within the scope of the appended claims.

Thus, for example, the shaping of the armour wires may occur by fixed rotatable members outside the region of the joint applying torsion to the cage wall such that the desired shape of the armour wires is obtained, whereupon they are pressed against the cable joint, are cut off and connected to the armouring of the respective cable.

## Claims

1. A method of restoring armouring on a cable, in connection with jointing or after a repair of a cable, whereby a plurality of armour wires, distributed essentially uniformly over the circumference of the cable, are brought to make contact with the cable, in the form of helical lines, and are fixed to the envelope surface of the cable,
**characterized in that**
essentially straight armour wires are placed around the joint or the repair, essentially in parallel with the cable, such that a cage, or part of a cage, limited by a cage wall consisting of essentially parallel armour wires, is formed,
torsion is applied to the cage wall such that the armour wires are given the shape of helical lines, or an essentially helical line-like shape, close to the surface of the joint or the repair,
the two ends of the armour wires which are in the shape of helical lines, or which have an essentially helical line-like shape, are connected to the armouring of the cable on the respective sides of the joint or the repair, and that
the armouring is lashed over the whole, or essentially the whole, region of the joint or the repair.

2. A method according to claim 1, **characterized in that** the essentially straight armour wires are fitted through, or otherwise placed in, two or more members which are rotatable around the cable.

3. A method according to claim 2, **characterized in that** two rotatable members, while rotating in opposite directions, apply torsion to the cage wall.

4. A method according to claim 3, **characterized in that** at least one clamping member is moved along the cable joint in order to press the armour wires which are in the form of helical lines, or which have an essentially helical line-like shape, against the surface of the joint or the repair.

5. A method according to claim 2, 3 or 4, **characterized in that** two rotatable members, while rotating in opposite directions, are moved along the cable such that the distance between them increases.

6. A method according to claim 5, **characterized in that** a clamping member, adjacent to the two rotatable members, are moved after these along the cable.

7. A method according to claim 1, 2, 3, 4, 5 or 6, **characterized in that** the number of wires in the cage wall is increased with increasing diameter of the joint or the repair.

8. A method according to claim 1, 2, 3, 4, 5 or 6, **characterized in that** the pitch of the helical line is reduced with increasing diameter of the joint or the repair.

## Patentansprüche

1. Ein Verfahren zur Wiederherstellung der Bewehrung an einem Kabel, in Zusammenhang mit dem Verbinden oder nach einer Ausbesserung eines Kabels, wobei eine Vielzahl von Bewehrungsdrähten, die im Wesentlichen gleichmäßig über den Umfang des Kabels verteilt sind, dazu gebracht werden, in der Form von spiralförmigen Linien Kontakt mit dem Kabel herzustellen, und an der einhüllenden Oberfläche des Kabels befestigt werden,
**dadurch gekennzeichnet dass**
im Wesentlichen gerade Bewehrungsdrähte um die Verbindungsstelle oder die Ausbesserung angeordnet sind, im Wesentlichen parallel zu dem Kabel, so dass ein Käfig, oder ein Teil eines Käfigs gebildet wird, der von einer Käfigwand begrenzt ist, die aus im Wesentlichen parallelen Bewehrungsdrähten besteht,
Torsion auf die Käfigwand nahe der Oberfläche der Verbindungsstelle oder der Ausbesserung angewandt wird, so dass den Bewehrungsdrähten die Form von spiralförmigen Linien oder im Wesentlichen eine spirallinienartige Form gegeben wird,
die zwei Enden der Bewehrungsdrähte, die die Form von spiralförmigen Linien aufweisen, oder eine im Wesentlichen spirallinienartige Form aufweisen, an den jeweiligen Seiten der Verbindungsstelle oder der Ausbesserung mit der Bewehrung des Kabels verbunden sind, und dass
die Bewehrung über den gesamten, oder im Wesentlichen den gesamten Bereich der Verbindungsstelle oder der Ausbesserung festgebunden ist.

2. Das Verfahren nach Anspruch 1, **dadurch gekennzeichnet, dass** die im Wesentlichen geraden Bewehrungsdrähte in zwei oder mehr Teile, die um das Kabel rotierbar sind, eingepasst oder anderweitig darin platziert sind.

3. Das Verfahren nach Anspruch 2, **dadurch gekennzeichnet, dass** zwei rotierbare Teile Torsion auf die Käfigwand anwenden, während sie in entgegengesetzte Richtungen rotieren.

4. Das Verfahren nach Anspruch 3, **dadurch gekennzeichnet, dass** zumindest ein Klemmteil entlang der Kabelverbindungsstelle bewegt wird, um die Bewehrungsdrähte, die die Form von spiralförmigen Linien oder eine im Wesentlichen eine spirallinienartige Form aufweisen, gegen die Oberfläche der Verbindungsstelle oder der Ausbesserung zu drücken.

5. Das Verfahren nach Anspruch 2, 3, oder 4, **dadurch gekennzeichnet, dass** zwei rotierbare Teile, während sie in entgegengesetzte Richtungen rotieren, entlang des Kabels bewegt werden, so das sich der Abstand zwischen ihnen vergrößert.

6. Das Verfahren nach Anspruch 5, **dadurch gekennzeichnet, dass** ein Klemmteil, das sich neben den zwei rotierbaren Teilen befindet, nach diesen entlang des Kabels bewegt wird.

7. Das Verfahren nach Anspruch 1, 2, 3, 4, 5, oder 6, **dadurch gekennzeichnet, dass** sich die Anzahl der Drähte in der Käfigwand mit zunehmenden Durchmesser der Verbindungsstelle oder der Ausbesserung erhöht.

8. Das Verfahren nach Anspruch 1, 2, 3, 4, 5, oder 6, **dadurch gekennzeichnet, dass** die Ganghöhe der spiralförmigen Linie mit zunehmenden Durchmesser der Verbindungsstelle oder der Ausbesserung reduziert wird.

## Revendications

1. Procédé de restauration du blindage sur un câble, en liaison avec une connexion ou après une réparation d'un câble, dans lequel on met une pluralité de fils de blindage, répartis sensiblement uniformément sur la circonférence du câble, en contact avec le câble, sous la forme de lignes hélicoïdales, et on les fixe à la surface formant l'enveloppe du câble,
**caractérisé en ce que**
on relie des fils de blindage sensiblement droits au blindage du câble sur un premier côté de la connexion ou de la réparation, de manière à former une cage ou une partie d'une cage, délimitée par une paroi de cage consistant en des fils de blindage essentiellement parallèles,
on applique une torsion à la paroi de la cage de façon à donner aux fils de blindage leur forme de lignes hélicoïdales, ou une forme sensiblement en lignes hélicoïdales, près de la surface de la connexion ou de la réparation,
on relie les deux extrémités des câbles de blindage qui sont sous la forme de lignes hélicoïdales, ou qui ont une forme sensiblement analogue à une ligne hélicoïdale, au blindage du câble sur les côtés respectifs de la connexion ou de la réparation, et **en ce que**
on ligature le blindage sur toute, ou sur sensiblement toute, la région de la connexion ou de la réparation.

2. Procédé suivant la revendication 1, **caractérisé en ce qu'**on adapte les fils de blindage sensiblement droites, ou on les place autrement, dans deux ou dans plusieurs éléments qui peuvent tourner autour du câble.

3. Procédé suivant la revendication 2, **caractérisé en ce que** deux éléments pouvant tourner, en étant tournés dans des sens opposés, appliquent une torsion à la paroi de la cage.

4. Procédé suivant la revendication 3, **caractérisé en ce qu'**on déplace au moins un élément de serrage le long de la connexion de câble afin de presser les fils de blindage, qui sont sous la forme de liges hélicoïdales, ou qui ont une forme essentiellement analogue à une ligne hélicoïdale, sur la surface de la connexion ou de la réparation.

5. Procédé suivant la revendication 2, 3 ou 4, **caractérisé en ce qu'**on déplace deux éléments pouvant tourner, alors qu'ils tournent en des sens opposés, le long du câble de façon à augmenter la distance entre eux.

6. Procédé suivant la revendication 5, **caractérisé en ce qu'**on déplace un élément de serrage, voisin des deux éléments pouvant tourner, après ceux-ci le long du câble.

7. Procédé suivant la revendication 1, 2, 3, 4, 5 ou 6, **caractérisé en ce qu'**on augmente le nombre de fils de la paroi de la cage au fur et à mesure qu'augmente le diamètre de la connexion ou de la réparation.

8. Procédé suivant la revendication 1, 2, 3, 4, 5 ou 6, **caractérisé en ce qu'**on réduit le pas de la ligne hélicoïdale au fur et à mesure qu'augmente le diamètre de la connexion ou de la réparation.
